# EUROPEAN PATENT APPLICATION

(11) **EP 4 492 004 A1**
(43) Date of publication of application: **15.01.2025**
(21) Application number: 22937469.9
(22) Date of filing: 14.04.2022
(51) Int. Cl.: G01C 15/00, G01S 17/89

(54) **INFORMATION PROCESSING SYSTEM AND INFORMATION PROCESSING METHOD**

(71) Applicant: Nintendo Co., Ltd., Kyoto-shi, Kyoto 601-8501 (JP)
(72) Inventor: AJIMIZU, Tatsuya, Kyoto-shi, Kyoto 601-8501 (JP); TAMURA, Yoshitaka, Kyoto-shi, Kyoto 601-8501 (JP); AOKI, Takafumi, Kyoto-shi, Kyoto 601-8501 (JP); FUKUSHIMA, Yuki, Kyoto-shi, Kyoto 601-8501 (JP); YAMAMOTO, Hiroshi, Kyoto-shi, Kyoto 601-8501 (JP)
(74) Representative: von Tietzen und Hennig, Nikolaus
(86) International application number: PCT/JP2022/017866
(87) International publication number: WO 2023/199490

(57) **Abstract**

An information processing system 1 comprises a station 10, a movable body 30 capable of moving with respect to the station, and one or a plurality of processors 34. The station has a first light source 12 and a two dimensionally driven MEMS mirror 15, and during the operation of the MEMS mirror, the station emits light rays from the first light source to a predetermined space around the station by reflecting the light rays with the MEMS mirror, thereby scanning the predetermined space two dimensionally with light rays. The movable body has a first light sensor 31 that detects reception of light rays. The processor has a direction specification unit 341 that specifies the value of a direction parameter indicating the direction of the movable body relative to the station on the basis of a timing at which the first light sensor has detected reception of light rays during scanning of the space by the station.

## Description

### FIELD

The present disclosure relates to an information processing system and information processing method.

### BACKGROUND

It has been known in the past to provide a controller held by a user with an acceleration sensor and angular velocity sensor (for example, PLT 1).

### [Citation List]

### [Patent Literature]

[PTL 1] Japanese Unexamined Patent Publication No. 2017-060850

### SUMMARY

### [Technical Problem]

In the controller described in PLT 1, a posture and operation of the controller can be detected by the acceleration sensor and angular velocity sensor. However, it was difficult to accurately detect in which direction the controller was positioned in a given space.

In consideration of the above problem, an object of the present disclosure is to enable a direction of a mobile body, such as a controller, to be detected in a given space.

### [Solution to Problem]

The gist of the present disclosure is as follows:
(1) An information processing system having: a station; a mobile body able to move with respect to the station; and at least one processor, wherein
   the station has a first light source and a MEMS mirror driven two-dimensionally, and makes light beam from the first light source be reflected by the MEMS mirror while driving the MEMS mirror to be emitted to a predetermined space around the station so as to scan the space two-dimensionally by the light beam,
   the mobile body has a first photo sensor for detecting reception of the light beam, and
   the processor has a direction identifying part for identifying a value of a direction parameter indicating a relative direction of the mobile body with respect to the station, based on a timing at which the first photo sensor detected reception of the light beam during the scan of the space by the station.
(2) The information processing system according to above (1), wherein the processor further has:
   a position determining part for determining a position of a virtual object in a virtual space based on the value of the direction parameter;
   an image generating part for generating image data based on the position of the virtual object; and
   an image outputting part for outputting the generated image data.
(3) The information processing system according to above (2), wherein the image outputting part outputs the image data to a monitor placed in real space.
(4) The information processing system according to above (3), wherein the station is placed near the monitor so that the light beam is emitted toward the space in front of a display screen of the monitor.
(5) The information processing system according to above (3), wherein the processor further has a guiding part for guiding a user to place the station near the monitor so that the light beam is emitted toward the space in front of a display screen of the monitor.
(6). The information processing system according to any one of above (1) to (5), wherein
   the station further has a second light source and a second photo sensor for detecting reception of reflected light beam of the light beam emitted from the second light source, and
   the processor further has a distance identifying part for identifying a value of a distance parameter indicating a distance between the station and an object around the station, based on reflected light beam detected by the second photo sensor.
(7) The information processing system according to above (6), wherein the second light source emits light beam so as to enter the MEMS mirror and be reflected by the MEMS mirror.
(8) The information processing system according to above (7), wherein the second light source and the first light source are the same shared light source.
(9) The information processing system according to above (8), wherein
   the station alternately performs scan processing for position measurement making the light beam from the shared light source perform a scan two-dimensionally so as to identify the value of the direction parameter and scan processing for distance measurement making the light beam from the shared light source perform a scan two-dimensionally so as to identify the value of the distance parameter, and
   the shared light source emits light beam by different modes between the scan processing for position measurement and the scan processing for distance measurement.
(10) The information processing system according to above (8), wherein the shared light source emits light beam comprised of continuous light beam and pulsed light beam superposed, while making the light beam from the shared light source perform a scan two-dimensionally.
(11) The information processing system according to above (7), wherein the first light source and the second light source are separate light sources emitting different light beam.
(12) The information processing system according to above (11), wherein the first light source and the second light source emit light beam of different wavelengths.
(13) The information processing system according to any one of above (6) to (12), wherein the processor further has a position identifying part for identifying a value of a position parameter indicating a three-dimensional position of the mobile body with respect to the station, based on the value of the direction parameter and the value of the distance parameter.
(14) The information processing system according to any one of above (1) to (13), wherein
   the station performs a raster scan in which a linear scan in a first direction by light beam from the first light source is performed multiple times in parallel while shifting in a second direction perpendicular to the first direction, and
   the direction identifying part identifies a value of a direction parameter relating to the second direction of the mobile body corresponding to the orientation of the second direction of the light beam from the first light source when a reception time by the first photo sensor is the longest in one scan in the first direction.
(15) The information processing system according to above (1), wherein
   the station performs a raster scan in which a linear scan in a first direction by light beam from the first light source is performed multiple times in parallel while shifting in a second direction perpendicular to the first direction, and
   the direction identifying part identifies a value of a direction parameter relating to the first direction of the mobile body based on a timing of change so that a reception intensity by the first photo sensor becomes higher.
(16) The information processing system according to any one of above (1) to (15), wherein the processor having the direction identifying parts is provided at the mobile body.
(17) An information processing method comprising:
   making light beam from a first light source of a station be reflected by a MEMS mirror while driving the MEMS mirror of the station to be emitted to a predetermined space around the station so as to scan that space two-dimensionally by that light beam;
   detecting reception of that light beam by a first photo sensor of a mobile body able to move relative to the station; and
   identifying a value of a direction parameter indicating a relative direction of the mobile body with respect to the station based on a timing at which the first photo sensor detected reception of the light beam during the scan of the space at the station.

### [ADVANTAGEOUS OF EFFECTS OF INVENTION]

According to the present disclosure, a direction of a mobile body, such as a controller, in a given space can be detected.

### BRIEF DESCRIPTION OF DRAWINGS

FIG. 1 is a view schematically showing an overall configuration of an information processing system.
FIG. 2 is a cross-sectional side view schematically showing the configuration of part of a station.
FIG. 3 is a block diagram showing the configuration of electronic components of the station.
FIG. 4 is a block diagram showing the configuration of a mobile body.
FIG. 5 is a block diagram showing the configuration of a main unit.
FIG. 6 is a view showing a state where light beam is emitted from the station.
FIG. 7 is a time chart of a horizontal direction angle of a MEMS mirror, etc., when the MEMS mirror is scanning a space around the station.
FIG. 8 is an operation sequence diagram showing a flow of processing for identifying a value of a direction parameter indicating a direction of the mobile body with respect to the station.
FIG. 9 is a flow chart showing a flow of information processing when a program is executed at a processor of the main unit.
FIG. 10 is a cross-sectional side view, similar to FIG. 2, schematically showing the configuration of part of a station according to a second embodiment.
FIG. 11 is a block diagram, similar to FIG. 3, showing the configuration relating to electronic components of the station according to the second embodiment.
FIG. 12 is a block diagram, similar to FIG. 5, showing the configuration relating to electronic components of a main unit according to the second embodiment.
FIG. 13 is a time chart of emission intensity in a light emitting element of a station and reception intensity detected by a distance measurement photo sensor 19.
FIG. 14 is a view schematically showing a state of scanning a space around the station by light beam emitted from the station.
FIG. 15 is an operation sequence diagram showing a flow of processing for identifying a value of a position parameter indicating a three-dimensional position of a mobile body with respect to the station.
FIG. 16 is a view, similar to FIG. 14, schematically showing a state where the space around the station is scanned by light beam emitted from the station.
FIG. 17 is a cross-sectional side view, similar to FIG. 10, schematically showing the configuration of part of a station according to a second modification of the second embodiment.
FIG. 18 is a view, similar to FIG. 14, schematically showing a state where a space around the station is scanned by light beam emitted from the station.

### DESCRIPTION OF EMBODIMENTS

Below, embodiments will be explained in detail while referring to the drawings. Note that, in the following explanation, similar component elements will be assigned the same reference notations.

### First Embodiment

### <Configuration of Information Processing System>

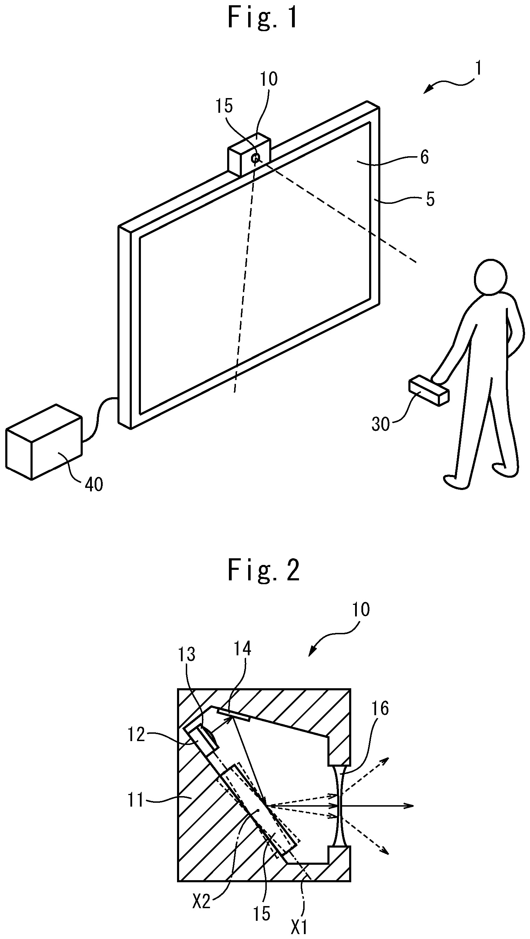

Referring to FIGS. 1 to 5, the configuration of an information processing system 1 according to a first embodiment will be explained. FIG. 1 is a view schematically showing an overall configuration of the information processing system 1.

As shown in FIG. 1, the information processing system 1 has a station 10, mobile body 30, and main unit 40. The station 10 and the main unit 40 are connected with each other by a cable and accordingly are configured to be able to communicate with each other by wire. The mobile body 30 and the main unit 40 are configured to be able to communicate with each other wirelessly. For communication between the mobile body 30 and the main unit 40, for example, communication based on any communication protocol formulated by the IEEE, ISO, IEC, etc. (for example, Bluetooth^{™} and Wi-Fi^{™}) is used. Note that, the station 10 and the main unit 40 may be configured to be able to communicate with each other wirelessly. Further, the mobile body 30 and the main unit 40 may be configured to be able to communicate with each other by wire.

Further, the information processing system 1 is connected to a monitor 5 having a display screen 6 for displaying an image. In the present embodiment, the main unit 40 is connected to the monitor 5 by a cable and is configured to be able to communicate with it by wire. The information processing system 1 (in particular, in the present embodiment, the main unit 40) outputs image data showing the image to be displayed at the monitor 5 to the monitor 5. The main unit 40 may be configured to be able to communicate with the monitor 5 wirelessly. Further, the main unit 40 may be provided with the display screen 6. That is, the main unit 40 and the monitor 5 may be integrated.

The monitor 5 is placed in real space. The monitor 5 is, for example, set on the floor, table, or shelf, so as not to be able to move or is set so as to be fixed to a wall. Note that the monitor 5 may be a portable monitor set in real space.

In the information processing system 1, the value of a direction parameter indicating a relative direction of the mobile body 30 with respect to the station 10 is identified and image data to be output to the monitor 5 is generated based on the identified value of the direction parameter.

Note that, in the present embodiment, the station 10 is a separate device from the main unit 40, but it may be a device integrated with the main unit 40. In this case, in the information processing system 1, the value of a direction parameter indicating a relative direction of the mobile body 30 with respect to the main unit 40 is identified.

### <<Station>>

Referring to FIGS. 1 to 3, the configuration of the station 10 will be explained. The station 10 emits continuous light beam to the space around the station 10 and scans a predetermined space around the station 10 by the continuous light beam. Further, the station 10 is arranged near the monitor 5. In particular, in the example shown in FIG. 1, the station 10 is arranged above the monitor 5. However, the station 10 may be arranged below the front of the display screen 6 of the monitor 5, at the side of the monitor 5, or other positions besides the upper side of the monitor 5. Whatever the case, the station 10 may be arranged at any position so long as light beam is emitted from the station 10 toward the space in front of the display screen 6 of the monitor 5.

FIG. 2 is a cross-sectional side view schematically showing the configuration of part of the station 10. As shown in FIG. 2, the station 10 has a housing 11, light emitting element 12, condenser lens 13, optical mirror 14, MEMS mirror 15, and concave lens 16.

The housing 11 houses the light emitting element 12, condenser lens 13, optical mirror 14, MEMS mirror 15, and concave lens 16. The housing 11 may house a later explained communication interface (communication I/F) 21, memory device 22, and processor 23 in addition to these components.

The light emitting element 12 functions as a first light source for emitting position measurement light beam used for identifying the direction of the mobile body 30 with respect to the station 10. In the present embodiment, the light emitting element 12 is a laser diode emitting constant wavelength infrared light beam with a dot projected shape. The light emitting element 12 is fixed to the housing 11 so that the emitted light beam enters a reflective surface of the optical mirror 14. Note that, if possible to emit light beam with a high linearity (high directivity), a light source other than a light emitting element may be used.

The condenser lens 13 is a lens for condensing the light beam emitted from the light source to enhance the linearity of the light beam. The condenser lens 13 is arranged on the light emitting surface of the light emitting element 12. The light beam emitted from the light emitting element 12 passes through the condenser lens 13, then proceeds linearly. The condenser lens 13 may be a wafer level lens processed at the wafer level.

The optical mirror 14 is a mirror reflecting light beam. The optical mirror 14 is fixed to the housing 11 so as to be positioned on the path of the light beam emitted from the light emitting element 12 through the condenser lens 13. The optical mirror 14 reflects the light beam from the light emitting element 12 so as to enter the reflective surface of the MEMS mirror 15.

Note that, in the present embodiment, the light beam from the light emitting element 12 is reflected at the optical mirror 14, then enters the MEMS mirror 15. However, the light emitting element 12 may be arranged so that the light beam from the light emitting element 12 directly enters the MEMS mirror 15.

The MEMS mirror 15 is a small sized mirror utilizing MEMS (Micro Electro Mechanical Systems) technology. The MEMS mirror 15 is attached to the housing 11 so that its reflective surface is positioned on the path of the light beam reflected by the optical mirror 14.

The MEMS mirror 15 is configured so that it can turn about a plurality of axes. In particular, in the present embodiment, it is configured so as to be able to turn about a first axis and a second axis perpendicular to the first axis. That is, in the present embodiment, the MEMS mirror 15 is driven so as to turn about two axes and accordingly is configured to be driven two-dimensionally.

If the MEMS mirror 15 turns and its reflective surface changes in orientation, the reflected direction of the light beam entering the MEMS mirror 15 will change. Therefore, if the MEMS mirror 15 turns about the first axis X1, the orientation of the light beam reflected at the MEMS mirror 15 changes in a direction perpendicular to the first axis X1 (first direction). Similarly, if the MEMS mirror 15 turns about the second axis X2, the orientation of the light beam reflected at the MEMS mirror 15 changes in a direction perpendicular to the second axis X2 (second direction). Therefore, in the present embodiment, it is possible to make the orientation of the light beam emitted from the station 10 change two-dimensionally by the MEMS mirror 15. Note that, the MEMS mirror 15 may be configured so as to turn about two axes not perpendicular and parallel to each other.

In particular, in the present embodiment, the first axis X1 extends perpendicular to the second axis X1 and extends parallel with the plane on which the MEMS mirror 15 is arranged in the housing 11. The second axis X2 extends parallel with the plane at which the station 10 is arranged (in the example shown in FIG. 1, the top surface of the monitor 5) and extends parallel with the plane on which the MEMS mirror 15 is arranged in the housing 11. Therefore, if the MEMS mirror 15 turns about the first axis X1, the horizontal direction orientation of the MEMS mirror 15 (first direction orientation) changes and the horizontal direction orientation of the light beam reflected at the MEMS mirror 15 changes. Further, if the MEMS mirror 15 turns about the second axis X2 between the two positions shown by the broken lines in the figure, the vertical direction orientation of the MEMS mirror 15 (second direction orientation) changes and the vertical direction orientation of the light beam reflected at the MEMS mirror 15 changes between the two orientations shown by the broken lines in the figure. Note that, the solid line in FIG. 2 shows the position of the MEMS mirror 15 and the orientation of the reflected light beam (orientation of center in second direction) when the position of the MEMS mirror 15 about the second axis X2 is at a center position of the two positions shown by the broken lines.

The concave lens 16 is a lens broadening light. The concave lens 16 is fastened to the housing 11 so that its center axis is positioned at the point where light beam emitted from the light emitting element 12 enters the MEMS mirror 15. Therefore, if the light beam reflected from the MEMS mirror 15 enters the concave lens 16, the angle of the reflected light beam with respect to the center axis becomes larger. For this reason, even if the turn angle of the MEMS mirror 15 is small, the angle of emission of the light beam from the station 10 can be made larger than the turn angle.

In the thus configured station 10, if light beam is emitted from the light emitting element 12, the emitted light beam becomes higher in linearity by passing through the condenser lens 13. The light beam passing through the condenser lens 13 is reflected at the optical mirror 14 and enters near the center of the reflective surface of the MEMS mirror 15. The light beam entering the reflective surface of the MEMS mirror 15 is reflected at the reflective surface of the MEMS mirror 15. At this time, if the MEMS mirror 15 is turned, the orientation of the reflected light beam from the MEMS mirror 15 changes. As explained above, the MEMS mirror 15 is driven two-dimensionally, therefore the direction of the reflected light beam from the MEMS mirror 15 also changes two-dimensionally. Further, the reflected light beam from the MEMS mirror 15 is broadened by the concave lens 16 and light beam having a dot projected shape is emitted from the station 10.

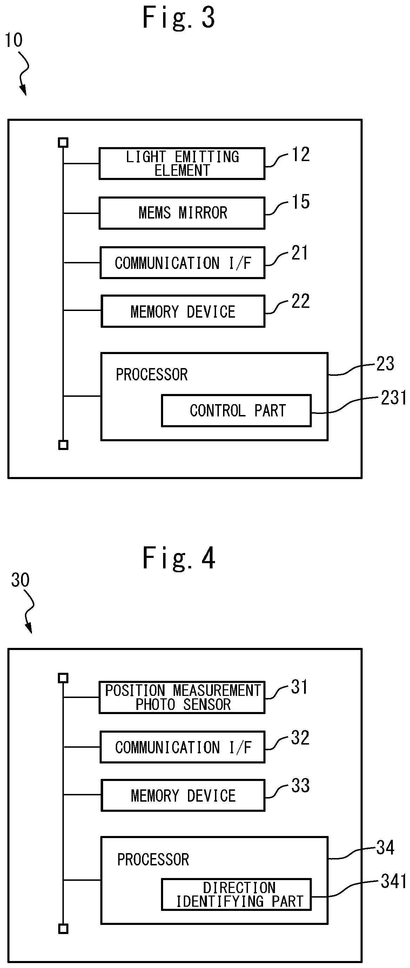

FIG. 3 is a block diagram showing the configuration of electronic components of the station 10. As shown in FIG. 3, the station 10 has a communication interface 21, memory device 22, and processor 23 in addition to the above-mentioned light emitting element 12 and MEMS mirror 15. The light emitting element 12, MEMS mirror 15, communication interface 21, and memory device 22 are connected to be able to communicate with the processor 23 through signal wires.

The communication interface 21 of the station 10 is an interface for communication with equipment outside of the station 10. In the present embodiment, to enable the station 10 to communicate with the main unit 40 by wire, the communication interface 21 has a connector for connecting with a wire connector of a cable (not shown) connected with the main unit 40. Note that, if the station 10 communicates with the main unit 40 wirelessly or the station 10 communicates with the mobile body 30 wirelessly, the communication interface 21 may have a wireless communication module.

The memory device 22 of the station 10, for example, has a volatile semiconductor memory (for example, RAM), nonvolatile semiconductor memory (for example, ROM), etc. The memory device 22 of the station 10 stores computer programs for performing various processing at the processor 23 of the station 10 and various data used when various processing is performed at the processor 23, etc. Note that, the memory device 22 of the station 10 may be incorporated in the processor 23 of the station 10.

The processor 23 of the station 10 has one or more CPUs (central processing units) and their peripheral circuits. The processor 23 of the station 10 may further have arithmetic circuits such as logical arithmetic units or numerical arithmetic units. The processor 23 of the station 10 performs various processing based on computer programs stored in the memory device 22 of the station 10. In particular, in the present embodiment, the processor 23 of the station 10 has a control part 231 controlling the light emitting element 12 and MEMS mirror 15.

Note that, in the present embodiment, the station 10 is provided with the memory device 22 and processor 23, but the station 10 need not be provided with the memory device 22 and processor 23. In this case, for example, the processor 43 of the main unit 40 has a control part 231. Accordingly, the light emitting element 12 and MEMS mirror 15 may be controlled by the processor 43 of the main unit 40.

### «Mobile body»

Next, referring to FIGS. 1 and 4, the configuration of the mobile body 30 will be explained. The mobile body 30 is a device able to move relative to the station 10. In particular, in the present embodiment, the mobile body 30 is a device able to move relative to the station 10 along with movement of the position of the hand of the user. The mobile body 30 may be any device so long as held by the user or attached to equipment held by the user and moving along with movement of the hand of the user. Therefore, the mobile body 30 may be a controller to which operations are input by a user. Alternatively, the mobile body 30 may be a peripheral device attached to such a controller by fasteners or an equivalent. Note that the mobile body 30 may be attached to somewhere on the user's body. Further, the mobile body 30 may move autonomously.

FIG. 4 is a block diagram showing the configuration of the mobile body 30. As shown in FIG. 4, the mobile body 30 has a position measurement photo sensor 31, communication interface (communication I/F) 32, memory device 33, and processor 34. The position measurement photo sensor 31, communication interface 32, and memory device 33 are connected to be able to communicate with the processor 34 through signal wires. The mobile body 30 may be provided with a battery if power is not supplied from the outside.

The position measurement photo sensor 31 functions as a first optical sensor for detecting reception of light beam from the first light source of the station 10. The position measurement photo sensor 31 is, for example, a photodiode. The position measurement photo sensor 31 detects reception of light beam emitted from the light emitting element 12 of the station 10, that is, in the present embodiment, infrared light beam of a specific wavelength. The position measurement photo sensor 31 may be an optical sensor reacting to only infrared light beam of the specific wavelength or may be a sensor reacting to infrared light beam of a certain degree of broad range of wavelength including the specific wavelength. If detecting the reception of light beam emitted from the light emitting element 12, the position measurement photo sensor 31 outputs a light reception signal corresponding to the reception intensity to the processor 34.

The communication interface 32 of the mobile body 30 is an interface for communicating with equipment at the outside of the mobile body 30. In the present embodiment, the communication interface 32 has a wireless communication module for communication based on the communication protocol described above so that the mobile body 30 can communicate wirelessly with the main unit 40, or the main unit 40 and station 10. Note that, if the mobile body 30 communicates with the main unit 40 by wire, the communication interface 32, for example, may have a connector for connection with a wire connector of the cable connected with the main unit 40.

The memory device 33 of the mobile body 30, for example, has a volatile semiconductor memory (for example, RAM), nonvolatile semiconductor memory (for example, ROM), etc. The memory device 33 of the mobile body 30 stores computer programs for performing various processing at the processor 34 of the mobile body 30, and various data used when various processing is performed at the processor 34 of the mobile body 30, etc. Note that, the memory device 33 of the mobile body 30 may be incorporated in the processor 34 of the mobile body 30.

The processor 34 of the mobile body 30 has one or more CPUs (central processing units) and their peripheral circuits. The processor 34 of the mobile body 30 may have arithmetic circuits such as logical arithmetic units or numerical arithmetic units. The processor 34 of the mobile body 30 performs various processing based on computer programs stored in the memory device 33 of the mobile body 30. In particular, in the present embodiment, the processor 34 of the mobile body 30 has a direction identifying part 341 for identifying a direction in which the mobile body 30 is positioned relative to the station 10.

Note that, if the mobile body 30 is a peripheral device able to be attached to a controller, the mobile body 30, for example, may be attached to the controller to be fixed at a predetermined position and predetermined posture with respect to the controller. In this case, the controller may have an attaching part for attachment to a mounting part of the main unit 40. In addition, the mobile body 30 may have a mounting part to which the attaching part of the controller is attached when the controller is detached from the main unit 40. Note that the structures of the attaching parts and mounting parts are not limited. For example, they may be rail structures, engagement structures, hook structures, and stick structures.

Further, if the mobile body 30 is a peripheral device able to be attached to the controller, it may be configured so as to be connected with the controller by wire and communicate by wire when the mobile body 30 is attached to the controller, and the controller may be configured to communicate with the main unit 40, etc., wirelessly. In this case, the controller may be provided with a battery, and the mobile body 30 may be supplied with electric power from the battery of the controller. Furthermore, in this case, the controller may have a memory device and processor and the processor of the controller may have at least part of the direction identifying part 341. Note that, at this time, the mobile body 30 need not have a memory device 33 and/or processor 34.

### <<Main unit>>

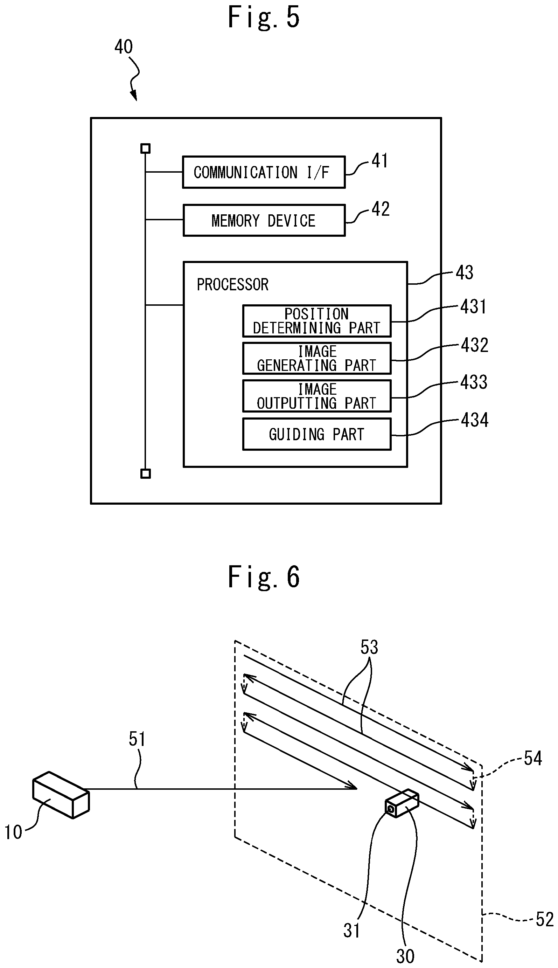

Next, referring to FIGS. 1 and 5, the configuration of the main unit 40 will be explained. The main unit 40 executes an OS program or application programs (for example, game programs) and other various programs and, as a results of executing these programs, outputs image data of images to be displayed on the display screen 6 of the monitor 5 to the monitor 5.

FIG. 5 is a block diagram showing the configuration of the main unit 40. As shown in FIG. 5, the main unit 40 has a communication interface (communication I/F) 41, memory device 42, and processor 43. The communication interface 41 and memory device 42 are connected to be able to communicate with the processor 43 through signal wires.

The communication interface 41 of the main unit 40 is an interface for communication with equipment outside of the main unit 40. In the present embodiment, the communication interface 41 has a wireless communication module for communication based on the communication protocol described above to enable the main unit 40 to wirelessly communicate with the mobile body 30. Further, the communication interface 32 may have a connector for connecting with the wire connector of a cable connected to the station 10 to enable the main unit 40 to communicate with the station 10 by wire. Note that the wireless communication module may be used for wireless communication with the station 10, while the connector may be used to be connected with the wire connector of a cable connected with the mobile body 30.

The memory device 42 of the main unit 40, for example, has a volatile semiconductor memory (for example, RAM), nonvolatile semiconductor memory (for example, ROM), etc. Furthermore, the memory device 42 of the main unit 40 may have a hard disk drive (HDD), solid state drive (SSD), or optical recording medium. Further, part of the memory device 42 of the main unit 40 may be detachable The memory device 42 of the main unit 40 stores computer programs for executing various processing at the processor 43 of the main unit 40 and various data, etc., used when the processor 43 executes various processing. The computer programs include an OS program and application programs (for example, game programs), etc.

The processor 43 of the main unit 40 has one or more CPUs (central processing units) and their peripheral circuits. The processor 43 of the main unit 40 may further have arithmetic circuits such as logical arithmetic units or numerical arithmetic units. The processor 43 of the main unit 40 performs various processing based on computer programs stored in the memory device 42 of the main unit 40. In particular, in the present embodiment, the processor 43 of the main unit 40 has a position determining part 431 for determining a position of a virtual object in virtual space, an image generating part 432 for generating image data based on the position of the virtual object, an image outputting part 433 for outputting the generated image data, and a guiding part 434 for guiding the placement position of the monitor 5.

### <Identification of Direction>

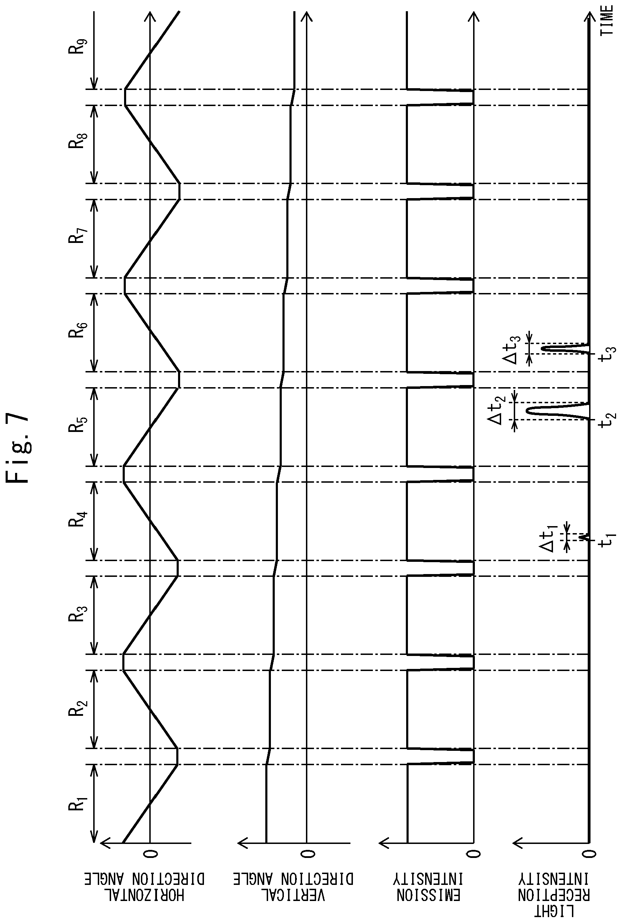

Next, referring to FIGS. 6 and 7, the technique for identifying a relative direction of the mobile body 30 with respect to the station 10 will be explained. FIG. 6 is a view showing the state where light beam 51 is emitted from the station 10. In particular, FIG. 6 shows the path of light beam 51 on a virtual plane 52 in a predetermined space around the station 10. Further, in the example shown in FIG. 6, the virtual plane 52 is a plane perpendicular to the path of the light beam 51 emitted from the station 10 and shows the plane in which the position measurement photo sensor 31 of the mobile body 30 is positioned. The paths 53 of the light beam 51 shown by the solid lines in the figure show the paths of the light beam 51 when the light beam 51 is continuously emitted from the station 10. On the other hand, the paths 54 shown by the broken lines in the figure show the paths through which light beam 51 would have passed if light beam had been emitted from the light emitting element 12 if considering operation of the MEMS mirror 15, although such light beam was not emitted from the light emitting element 12.

As will be understood from FIG. 6, in the present embodiment, a scan is repeatedly performed by the light beam 51 in the first direction (in the present embodiment, the horizontal direction). In other words, in the present embodiment, a linear scan by the light beam 51 in the first direction is performed multiple times in parallel while shifting in the second direction, that is a raster scan is performed. In particular, in the present embodiment, in the first direction, a scan in the forward direction in the first direction (horizontal direction) and a scan in the reverse direction in the first direction (horizontal direction) are repeatedly performed while shifting the position in the vertical direction. As a result, in one scan processing, the light beam 51 emitted from the station 10 is used to scan a predetermined space around the station 10.

FIG. 7 is a time chart of a horizontal direction angle and a vertical direction angle of the MEMS mirror 15, emission intensity, and reception intensity, when scanning a space around the station 10. The horizontal direction angle of the MEMS mirror 15 in the figure (first direction angle) shows the angle with respect to the orientation of the center of the MEMS mirror 15 in the horizontal direction. Similarly, the vertical direction angle of the MEMS mirror 15 (second direction angle) shows the angle with respect to the orientation of the center of the MEMS mirror 15 in the vertical direction (orientation of MEMS mirror 15 shown by solid line in FIG. 2). The emission intensity shows the intensity of the light beam 51 emitted from the station 10, that is, the emission intensity of the light emitting element 12. Further, the reception intensity shows the intensity of light beam detected by the position measurement photo sensor 31 of the mobile body 30.

As shown in FIG. 7, in the present embodiment, in the state where the vertical direction angle of the MEMS mirror 15 is constant, the horizontal direction angle of the MEMS mirror 15 is changed from the largest value to the smallest value, and during this period, light beam continues to be emitted from the light emitting element 12 (horizontal scan period R₁in figure). If the horizontal direction angle of the MEMS mirror 15 reaches its smallest value, light beam is stopped from being emitted from the light emitting element 12 and the vertical direction angle is changed to become slightly smaller in a state where the horizontal direction angle of the MEMS mirror 15 is constant. After that, in the state where the vertical direction angle of the MEMS mirror 15 is constant, the horizontal direction angle of the MEMS mirror 15 is changed from the smallest value to the largest value, and during this period, light beam continues to be emitted from the light emitting element 12 (horizontal scan period R₂ in figure). If the horizontal direction angle of the MEMS mirror 15 reaches its largest value, light beam is stopped from being emitted from the light emitting element 12 and the vertical direction angle is changed to become slightly smaller in a state where the horizontal direction angle of the MEMS mirror 15 is constant. By such operations being repeated, a raster scan is performed of the predetermined space around the station 10 by the light beam 51.

Note that, in the example shown in FIG. 7, light beam is emitted from the light emitting element 12 when the horizontal direction angle of the MEMS mirror 15 is changing, while light beam stops being emitted from the light emitting element 12 when the vertical direction angle of the MEMS mirror 15 is changing. However, the scan mode is not limited to such a mode. Various modes of scan are possible. For example, light beam may stop being emitted from the light emitting element 12 near the largest value and smallest value of the horizontal direction angle of the MEMS mirror 15 even when it is changing. The period during which light beam is emitted from the light emitting element 12 when the horizontal direction angle of the MEMS mirror 15 is changing is longer than the period in which light beam is emitted in this case. Further, even when the vertical direction angle of the MEMS mirror 15 is changing, light beam may be emitted from the light emitting element 12. Furthermore, the vertical direction angle of the MEMS mirror 15 may be changed from the largest value to the smallest value, and during this period light beam is emitted from the light emitting element 12, after that, the horizontal direction angle of the MEMS mirror 15 may be changed slightly, and during this period, light beam is stopped from being emitted from the light emitting element 12. By such an operation being repeated, a raster scan may be performed.

Further, in the example shown in FIG. 7, the horizontal direction angle and vertical direction angle of the MEMS mirror 15 change linearly by a certain speed (in FIG. 7, change linearly). However, the horizontal direction angle and vertical direction angle of the MEMS mirror 15 may, for example, change sinusoidally. In this case, for example, the MEMS mirror 15 can be made to vibrate by the resonant frequency in order for the horizontal direction angle and vertical direction angle of the MEMS mirror 15 to change sinusoidally.

Furthermore, in the present embodiment, a predetermined space around the station 10 is raster scanned by the light beam 51. However, if possible to scan a predetermined space around the station 10 without any gaps, another technique may be used for the scan. Further, the scan may be performed so that the scanned region at the virtual plane such as shown in FIG. 6 becomes circular, elliptical, or other shape besides a rectangle.

Further, in the present embodiment, while light beam 51 is used for scanning in the horizontal direction, continuous light beam is emitted from the light emitting element 12. However, pulsed light beam may be emitted from the light emitting element 12.

If the space around the station 10 is scanned by light beam 51 in this way, the position measurement photo sensor 31 of the mobile body 30 positioned in the scanned space detects the reception of the light beam 51. Such timing of reception of light beam 51 by the position measurement photo sensor 31 indicates the direction of the mobile body 30 with respect to the station 10.

In the example shown in FIG. 7, reception of light beam 51 is detected by the position measurement photo sensor 31 at the horizontal scan periods R₄, R₅, R₆. In particular, in the example shown in FIG. 7, the position measurement photo sensor 31 detects light reception from the time t₁ in the horizontal scan period R₄ over the reception time Δt₁, detects light reception from the time t₂ in the horizontal scan period R₅ over the reception time Δt₂, and detects light reception from the time t₃ in the horizontal scan period R₆ over the reception time Δt₃. Further, in the illustrated example, the reception time Δt₂ is longer compared with the reception time Δt₁ and the reception time Δt₃.

In the present embodiment, the vertical direction orientation of the mobile body 30 with respect to the station 10 is identified in accordance with the vertical direction angle of the MEMS mirror 15, that is, the vertical direction orientation of the light beam 51 emitted from the station 10, when the reception time is the longest. In the illustrated example, the vertical direction orientation of the mobile body 30 is identified based on the vertical direction angle of the MEMS mirror 15 in the horizontal scan period R₅ at which reception of light beam with the longest reception period Δt₂ was detected by the position measurement photo sensor 31.

Further, in the present embodiment, the horizontal direction orientation of the mobile body 30 with respect to the station 10 is identified based on the timing at which light reception with the longest reception time started to be detected, that is, the timing at which the reception intensity changed to becoming higher along with light reception with the longest reception time. More specifically, the horizontal direction orientation of the mobile body 30 with respect to the station 10 is identified in accordance with the horizontal direction angle of the MEMS mirror 15 at this timing, that is the horizontal direction orientation of the light beam 51 emitted from the station 10. Therefore, in the illustrated example, the horizontal direction orientation of the mobile body 30 with respect to the station 10 is identified according to the horizontal direction orientation of the light beam 51 emitted from the station 10 at the time t₂ at which light reception with the longest reception time Δt₂ started to be detected by the position measurement photo sensor 31.

According to the present embodiment, a predetermined space around the station 10 is two-dimensionally scanned by light beam by the station 10 in this way, and the relative direction of the mobile body 30 with respect to the station 10 is identified based on the timing at which the light beam was detected by the position measurement photo sensor 31 of the mobile body 30. In particular, in the present embodiment, the identification is mainly performed by the light emitting element 12, MEMS mirror 15, and position measurement photo sensor 31. Accordingly, the relative direction of the mobile body in any space (in the present embodiment, the direction of the mobile body 30 with respect to the station 10) can be detected by a simple configuration.

Further, in the present embodiment, light beam having a dot projected shape is emitted from the station 10. As a result, in the present embodiment, since the shape of the light beam finally projected is a dot, for example, compared with the case where the shape of the light beam finally projected is linear, the energy required for emission of the light beam is smaller and accordingly light emitting element 12 having a relatively low output power can be used to identify the relative direction of the mobile body 30. In addition, in the present embodiment, since the MEMS mirror 15 is used for the scan, even if using light beam having a dot projected shape, a broad range of space can be scanned in a short time. Further, since the shape of the light beam finally projected is a dot, so long as the shape of the light beam emitted from the light emitting element 12 is a dot, the shape of the light beam emitted from the light emitting element 12 can be finally projected without changing the shape of the light beam emitted. Note that the "dot" does not necessarily mean a true circle. An ellipse or a polyhedron is also possible. Further, light beam not of a dot shape may be emitted from the light emitting element 12. In this case, the shape of the light beam is converted to a dot before being finally projected.

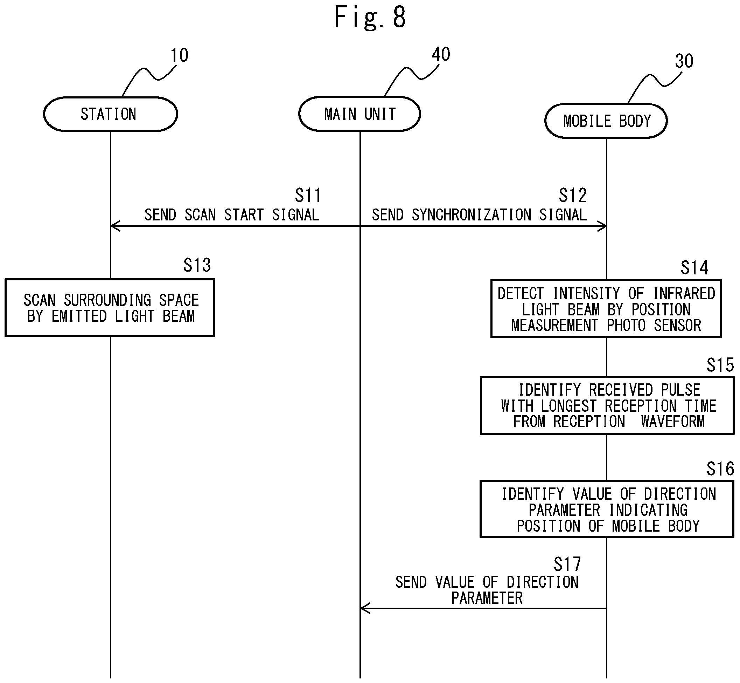

FIG. 8 is an operation sequence diagram showing a flow of processing for identifying a value of a direction parameter indicating a direction of the mobile body 30 with respect to the station 10. The illustrated processing is performed every certain time interval (for example, every approximately 17 ms).

First, the processor 43 of the main unit 40 sends the station 10 a scan start signal for making the scan of the space by the light beam 51 start (step S 11). Further, simultaneously with this, the processor 43 sends the mobile body 30 a synchronization signal showing the timing at which the scan was started (step S12). If the processor 34 of the mobile body 30 receives the synchronization signal, the scan start times by the station 10 are synchronized between the processor 34 of the mobile body 30 and the processor 43 of the main unit 40.

If at step S11 the processor 23 of the station 10 receives a scan start signal, the control part 231 of the processor 23 controls the light emitting element 12 and MEMS mirror 15 so that the light beam 51 emitted from the station 10 scans a predetermined space around the station 10 (step S13). Specifically, the light emitting element 12 and MEMS mirror 15 are controlled such as shown in FIG. 7. As a result, one scan processing including a series of scans by the light beam 51 emitted from the station 10 is performed.

While one scan processing is being performed at the station 10 in this way, the reception intensity of the infrared light beam is detected at the position measurement photo sensor 31 of the mobile body 30 (step S14). At this time, as shown in FIG. 6 and FIG. 7, the reception intensity of the infrared light beam detected by the position measurement photo sensor 31 of the mobile body 30 becomes higher at a timing corresponding to the position of the mobile body 30 in the predetermined space being scanned.

If one scan by light beam 51 at the station 10 finishes, the direction identifying part 341 of the processor 34 of the mobile body 30 identifies the light reception with the longest reception time from the reception waveform of the position measurement photo sensor 31 at one scan (step S15). For example, in the example shown in FIG. 7, the direction identifying part 341 identifies the light reception starting from the time t₂ as the light reception with the longest reception time.

After that, the processor 34 of the mobile body 30 identifies the value of the direction parameter indicating the direction of the mobile body 30 with respect to the station 10, based on the timing at which reception of light with the longest reception time started to be detected, in one synchronized scan processing by the station 10 (step S16). The direction parameter, for example, is the horizontal direction angle and vertical direction angle of the position of the mobile body 30 with respect to the station 10. Further, the timing at which reception of light with the longest reception time started to be detected during one scan processing in fact shows the direction of the mobile body 30 with respect to the station 10, therefore the direction parameter may be the timing at which reception of light with the longest reception time was detected during one scan processing. If the value of the direction parameter is identified, the processor 34 of the mobile body 30 sends the identified value of the direction parameter to the main unit 40 (step S17).

### <Processing at Main unit>

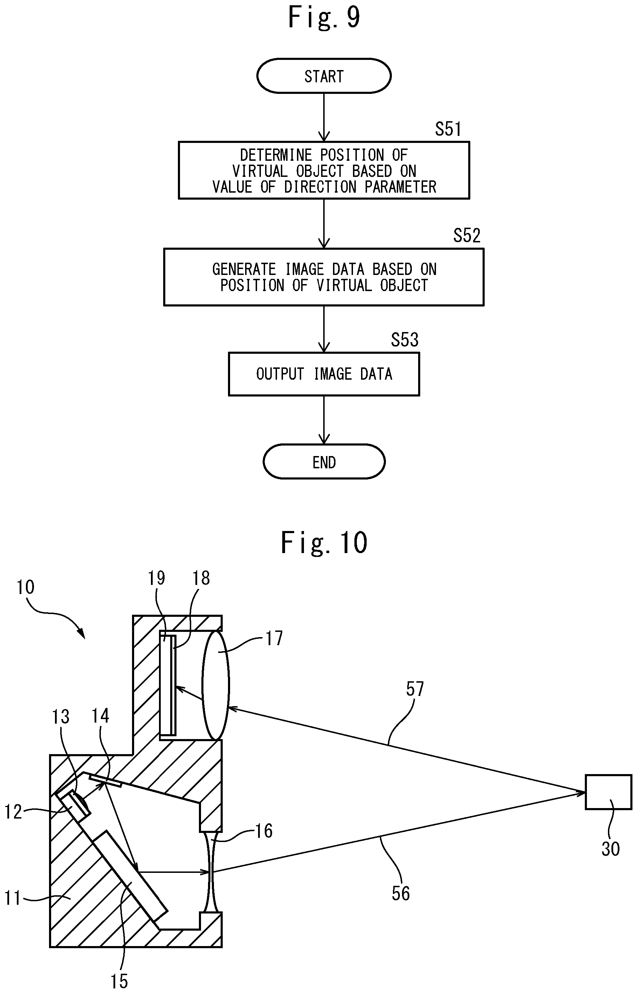

Next, referring to FIG. 9, the processing at the main unit 40 using the value of the direction parameter will be explained. The processor 43 of the main unit 40 executes an OS program or application program. In particular, in the processor 43 of the main unit 40 of the present embodiment, a two-dimensional virtual space is formed in the OS program or application program, and the position, etc., of a virtual object in the virtual space are controlled by input from the user. Such input from the user includes the relative direction of the mobile body 30 held by the user with respect to the station 10.

FIG. 9 is a flow chart showing a flow of information processing when an OS program or application program is executed at the processor 43 of the main unit 40. The processing shown in FIG. 9 is performed every certain time interval.

As shown in FIG. 9, first, the position determining part 431 of the processor 43 of the main unit 40 determines the two-dimensional position of a virtual object in a virtual space, based on the value of a direction parameter received from the mobile body 30 at step S17 of FIG. 8 (step S51). In particular, in the present embodiment, the position determining part 431 determines the position of the virtual object according to the relative direction of the mobile body 30 with respect to the station 10 indicated by the value of the direction parameter. Therefore, for example, if the mobile body 30 moves upward with respect the station 10, the position of the virtual object in the virtual space also moves upward.

Next, the image generating part 432 of the processor 43 generates image data of an image to be displayed on the display screen 6 of the monitor 5, based on the position of the virtual object identified at step S51 (step S52). Therefore, for example, if the position of the virtual object in the virtual space moves upward, the image data is generated so that the virtual object in the image moves upward.

Next, the image outputting part 433 of the processor 43 outputs the image data generated at step S52 to the monitor 5 (step S53). As a result, the display screen 6 of the monitor 5 displays an image shown by the image data generated at step S52. Therefore, according to the present embodiment, the position of a virtual object displayed on the display screen 6 of the monitor 5 changes based on the orientation of the mobile body 30 with respect to the station 10 and, accordingly, it becomes possible for the user to intuitively manipulate the virtual object.

Note that, in the present embodiment, the image outputting part 433 outputs image data to the monitor 5 connected to the main unit 40. However, so long as equipment having a display screen able to display a moving image, the image outputting part 433 may output the image data to other equipment. For example, if the main unit 40 has a display screen, it is also possible to output the image data to the screen control part for controlling the display screen of the main unit 40.

Further, in the present embodiment, the position determining part 431 determines a two-dimensional position of a virtual object, based on the value of the direction parameter at step S51. However, the posture (orientation) of a virtual object may be determined based on the value of the direction parameter instead of or in addition to the two-dimensional position of the virtual obj ect.

In this regard, as explained above, the station 10 has to be placed near the monitor 5 so that light beam is emitted toward the space in front of the display screen 6 of the monitor 5. Therefore, in the present embodiment, the guiding part 434 of the processor 43 of the main unit 40 guides the user so as to place the station 10 near the monitor 5 so that light beam from the station 10 is emitted toward the space in front of the display screen 6 of the monitor 5.

Specifically, the guiding part 434 makes the display screen 6 of the monitor 5 display a guidance image so as to place the station 10 at a predetermined position near the monitor 5. Further, the guiding part 434 may make voice guidance prompting such placement of the station 10 be output from a speaker of the monitor 5 or main unit 40. Such guidance at the guiding part 434 is, for example, performed when the main unit 40 is started up or when an OS program or application program starts to be executed by the processor 43 of the main unit 40.

According to the present embodiment, the data is output to the monitor 5 placed in real space outside of the information processing system 1. For this reason, since the user moves within a range able to view the monitor 5, compared with the case where, for example, the display screen 6 moves together with the user such as with a head mounted display, the movement of the user and the mobile body gripped by the user can be expected to become smaller. For this reason, by limiting the region scanned by the station 10, it is possible to shorten the time required for one scan processing and possible to raise the scan frequency.

Further, in the present embodiment, there is a high possibility of the user being in the space in front of the display screen 6 so as to be able to view the display screen 6 of the monitor 5. Further, in the present embodiment, the station 10 is placed near the monitor 5 so as to scan the space in front of the monitor 5, therefore it is possible to raise the possibility of detection of the mobile body 30.

### Second Embodiment

Next, referring to FIGS. 10 to 15, an information processing system 1 according to a second embodiment will be explained. The configuration and operation of the information processing system 1 according to the second embodiment are basically similar to the configuration and operation of the information processing system 1 according to the first embodiment. Below, parts different from the information processing system 1 according to the first embodiment will be explained.

The information processing system 1 according to the second embodiment identifies a three-dimensional position of the mobile body 30 with respect to the station 10. In particular, the information processing system 1 according to the second embodiment identifies the three-dimensional position of the mobile body 30 with respect to the station 10 by identifying the distance between the station 10 and the mobile body 30 in addition to the direction of the mobile body 30 with respect to the station 10.

FIG. 10 is a cross-sectional side view, similar to FIG. 2, schematically showing the configuration of part of the station 10 according to the second embodiment. As shown in FIG. 10, the station 10 has a convex lens 17, IR filter 18, and distance measurement photo sensor 19 in addition to the component elements shown in FIG. 2.

In the present embodiment, the light emitting element 12 also functions as a second light source for emitting light beam for measurement of distance used for identifying the distance between the station 10 and the mobile body 30. Therefore, in the present embodiment, the light emitting element 12 is a shared light source functioning as a first light source for emitting light beam for position measurement and a second light source for emitting light beam for distance measurement. The light beam for distance measurement, like the light beam for position measurement, is emitted from the light emitting element 12 so that it enters the MEMS mirror 15 through the optical mirror 14 and is reflected at the MEMS mirror 15.

The convex lens 17 is a lens focuses the entering light beam. In the present embodiment, the convex lens 17 focuses the entering light beam at the light receiving part of the distance measurement photo sensor 19. Due to this, it is possible to raising the intensity of the light beam entering the light receiving part of the distance measurement photo sensor 19.

The IR filter 18 is a filter passing only infrared light beam, in particular infrared light beam of a specific wavelength emitted from the light emitting element 12. Due to this IR filter 18, only light beam emitted from the light emitting element 12 and reflected at any location reaches the distance measurement photo sensor 19.

The distance measurement photo sensor 19 functions as a second optical sensor for detecting reception of light beam from the second light source of the station 10. The distance measurement photo sensor 19, for example, is a photodiode similar to the position measurement photo sensor 31 of the mobile body 30. If the distance measurement photo sensor 19 detects reception of light emitted from the light emitting element 12, it sends the processor 23 a reception signal corresponding to the reception intensity.

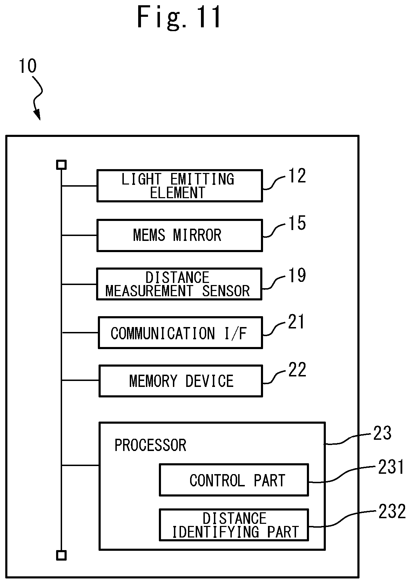

FIG. 11 is a block diagram, similar to FIG. 3, showing the configuration relating to electronic components of the station 10 according to the second embodiment. As shown in FIG. 11, the processor 23 of the station 10 has a distance identifying part 232 for identifying the value of the distance parameter indicating the distance between the station 10 and an object in addition to the control part 231.

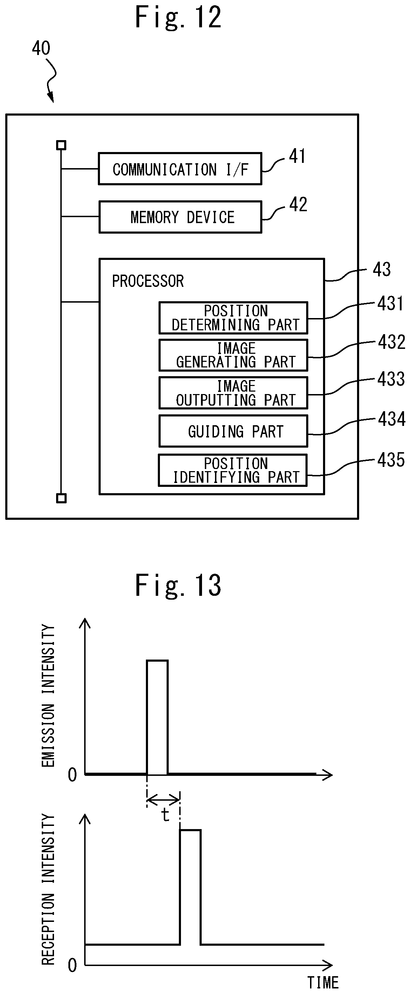

FIG. 12 is a block diagram, similar to FIG. 5, showing the configuration relating to electronic components of the main unit 40 according to the second embodiment. As shown in FIG. 13, the processor 43 of the main unit 40 further has a position identifying part 435 identifying the three-dimensional position of the mobile body 30 with respect to the station 10.

### <Identification of Three-Dimensional Position>

Next, referring to FIG. 10 and FIGS. 13 to 15, the technique for identification of the three-dimensional position of the mobile body 30 with respect to the station 10 will be explained. As shown in FIG. 10, if pulsed light beam 56 is emitted from the station 10 toward the mobile body 30 or other object around the station 10, light beam entering the object is dispersed and reflected. Part of that enters the distance measurement photo sensor 19 through the convex lens 17.

FIG. 13 is a time chart of an emission intensity in the light emitting element 12 of the station 10 and a reception intensity detected by the distance measuring photo sensor 19. As shown in FIG. 13, if the light emitting element 12 emits pulsed light beam, the reflected light beam of this pulsed light beam is detected by the distance measurement photo sensor 19 along with a delay of time "t". The time "t" at this time becomes longer the longer the distance to an object positioned in the direction in which the pulsed light beam is emitted from the station 10. Therefore, by measuring the time "t" up to when pulsed light beam is emitted from the station 10 in any direction and its reflected light beam is received, it is possible to identify the distance between the object positioned in that direction and the station 10.

Further, by emitting such pulsed light beam while changing the orientation of the MEMS mirror 15, it is possible to identify the distance up to an object positioned in various directions with respect to the station 10. For this reason, in the present embodiment, pulsed light beam emitted from the station 10 is used to scan a predetermined space around the station 10 (space same as space scanned by the continuous light beam 51). Due to this, it is possible to identify the value of the distance parameter indicating the distance between the station 10 in the predetermined space around the station 10 and an object around the station 10.

The value of the distance parameter generated in this way shows the distance between an object positioned in various directions from the station 10 and the station 10. Among these, the distance in the direction of the mobile body 30 with respect to the station 10 identified using the position measurement photo sensor 31 shows the distance between the station 10 and the mobile body 30. Therefore, in the present embodiment, it is possible to identify the three-dimensional position of the mobile body 30 with respect to the station 10 based on the value of the distance parameter indicating the distance to an object in the surroundings of the station 10 and the value of the direction parameter indicating the direction of the mobile body 30 with respect to the station 10. Therefore, in the present embodiment, in addition to mainly the light emitting element 12, MEMS mirror 15, and position measurement photo sensor 31, the distance measurement photo sensor 19 is used to identify the three-dimensional position of the mobile body 30. Accordingly, a simple configuration can be used to identify the three-dimensional position of the mobile body 30.

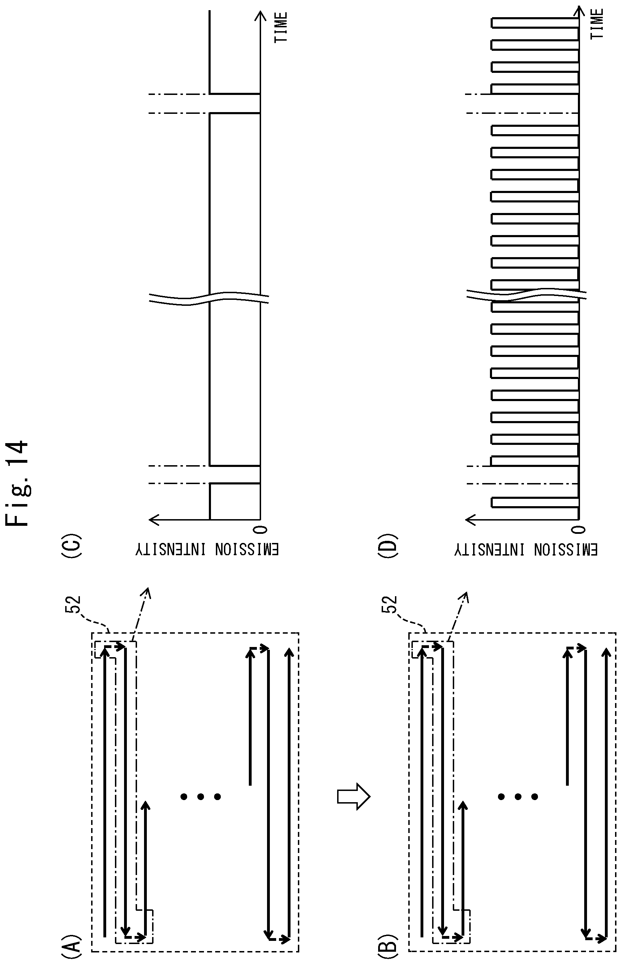

FIG. 14 is a view schematically showing a state of scanning a space around the station 10 by light beam emitted from the station 10. FIGS. 14(A) and 14(B) show the path of light beam at a virtual plane 52. Further, FIG. 14(C) shows a trend over time of an intensity of emission from the light emitting element 12 when scanning part of the region of FIG. 14(A) while FIG. 14(D) shows a trend over time of an intensity of emission from the light emitting element 12 when scanning part of the region of FIG. 14(B).

As will be understood from FIGS. 14(A) and 14(C), in the present embodiment, first continuous light beam is used to perform one scan processing for two-dimensional position measurement. The scan processing for position measurement at this time is performed in the same way as the scan processing explained using FIGS. 6 and 7. Due to this scan processing for position measurement, the direction of the mobile body 30 with respect to the station 10 is identified.

Further, after such scan processing for position measurement ends, next, as shown in FIGS. 14(B) and 14(D), pulsed light beam is used for one two-dimensional distance scan processing for distance measurement. Note that, the emission interval of pulsed light beam is set longer than the time required for the emitted pulsed light beam to be reflected at an object and return. For example, the emission interval of pulsed light beam is set to the longest time required being reflected at an object positioned at a distance within the envisioned range of use and return. In scan processing for distance measurement, the scan is performed by a scan routine similar to the scan processing for position measurement. Due to this scan processing for distance measurement, the distance to an object around the station 10 is identified. In the present embodiment, such scan processing for position measurement and scan processing for distance measurement are alternately performed. Further, light beam is emitted in different modes from the light emitting element 12 between the scan processing for position measurement and the scan processing for distance measurement. Specifically, in the scan processing for position measurement, continuous light beam is used for scanning, while in the scan processing for distance measurement, pulsed light beam is used for scanning. Further, in the present embodiment, the emission intensity of the light emitting element 12 at the scan processing for position measurement may be weaker than the emission intensity of the light emitting element 12 at the scan processing for distance measurement.

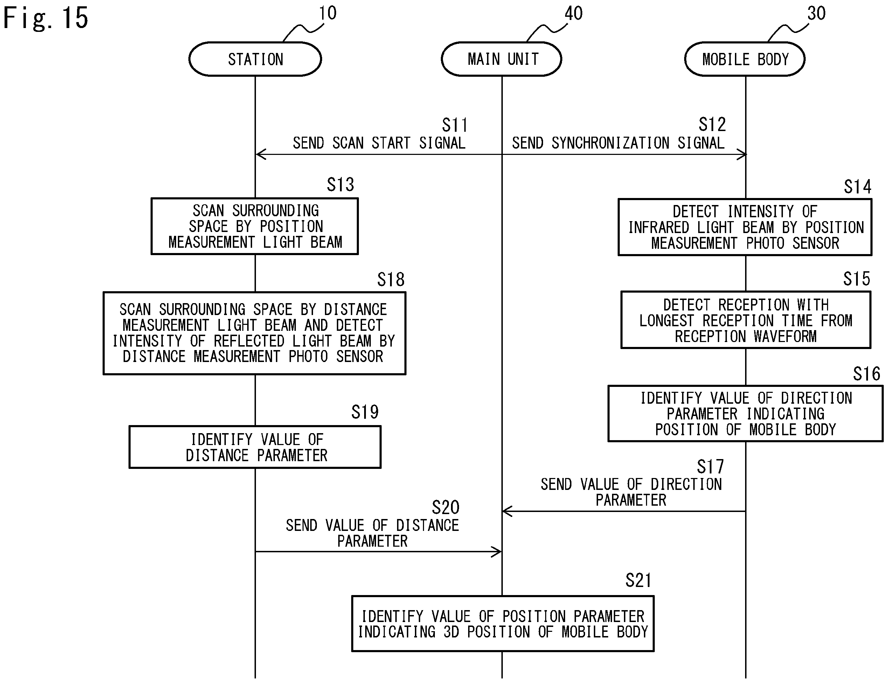

FIG. 15 is an operation sequence diagram showing a flow of processing for identifying a value of a position parameter indicating a three-dimensional position of a mobile body 30 with respect to the station 10. The illustrated processing is performed at each certain time interval (for example, each 33 ms). Note that, steps S11 to S17 are similar to FIG. 8, therefore explanations will be omitted.

If at step S11 the processor 23 of the station 10 receives a scan start signal, as shown in FIGS. 14(A) and 14(C), the control part 231 of the processor 23 controls the light emitting element 12 and MEMS mirror 15 so as to scan a predetermined space around the station 10 for position measurement by the continuous light beam 51 (step S13). As a result, one scan processing for position measurement is performed by the continuous light beam 51.

After one scan processing for distance measurement is finished, as shown in FIGS. 14(B) and 14(D), the control part 231 of the processor 23 controls the light emitting element 12 and MEMS mirror 15 so as to scan a predetermined space around the station 10 for distance measurement by pulsed light beam 56 (step S18). As a result, one scan processing for distance measurement is performed by the pulsed light beam 56. Further, while one scan processing for distance measurement is being performed, the reception intensity of the infrared light beam is detected at the distance measurement photo sensor 19 of the station 10 (step S18).

If the reception intensity is detected by the distance measurement photo sensor 19, the distance identifying part 232 of the processor 23 of the station 10 identifies the value of the distance parameter indicating the distance up to an object in each direction based on the timing of emission of the pulsed light beam 56 and the timing at which the reception intensity becomes high (step S19). That is, the distance identifying part 232 identifies the value of the distance parameter indicating the distance between the station 10 and an object around the station 10 based on the reflected light beam detected by the distance measurement photo sensor 19. The distance parameter is, for example, a depth map showing the distance between the station 10 in a predetermined space around the station 10 and an object around the station 10. If the value of the distance parameter is identified, the processor 34 of the station 10 sends the identified value of the distance parameter to the main unit 40 (step S20).

If the position identifying part 435 of the processor 43 of the main unit 40 receives the value of the direction parameter from the mobile body 30 and receives the value of the distance parameter from the station 10, it identifies the value of the position parameter indicating the three-dimensional position of the mobile body 30 based on these parameters (step S21). Specifically, it is possible to identify the parameter relating to the distance between the mobile body 30 and the station 10 according to the value of the direction parameter at the distance parameter (for example, depth map) or from the value of the distance parameter in a close direction. As a result, it is possible to identify the value of the position parameter indicating the three-dimensional position of the mobile body 30 from the direction parameter and the parameter relating to the distance between the mobile body 30 and the station 10.

The value of the position parameter identified in this way is, as explained using FIG. 9, used to generate and output image data at the processor 43 of the main unit 40. In particular, in the present embodiment, at the processor 43, a three-dimensional virtual space is formed at the OS program or an application program. The three-dimensional position in the virtual space is determined based on the value of the position parameter.

### <Modifications>

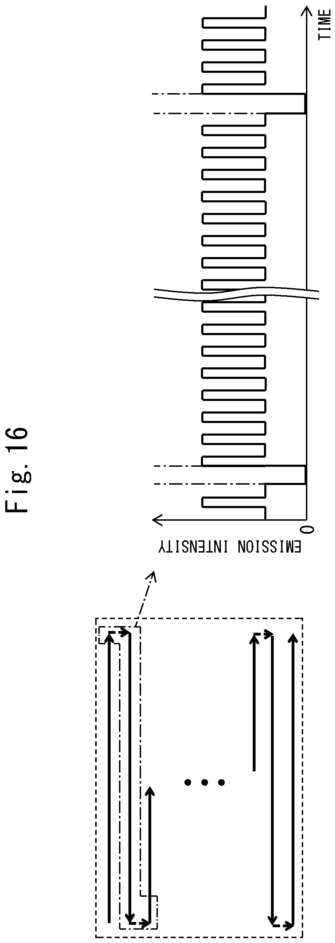

Next, referring to FIG. 16, a first modification of the information processing system 1 according to the second embodiment will be explained. In the second embodiment, the scan processing using continuous light beam and scan processing using pulsed light beam are alternately performed. Further, the position of the mobile body 30 is identified each time the scan processings of both of the scan processing using the continuous light beam and the scan processing using pulsed light beam are completed. Therefore, in the second embodiment, it is necessary to perform the scan processing two times in order to identify the position of the mobile body 30. The number of times of identification of the position of the mobile body 30 per unit time was small.

As opposed to this, in the first modification, in one scan processing, the light emitting element 12 emits a superposed light beam comprised of the continuous light beam used for identification of the value of the direction parameter and the pulsed light beam used for identification of the value of the distance parameter. Further, that superposed light beam of continuous light beam and pulsed light beam is used to scan a predetermined space around the station 10.

FIG. 16 is a view, similar to FIG. 14, schematically showing a state where a space around the station 10 is scanned by light beam emitted from the station 10. As will be understood from FIG. 16, in the present embodiment, pulsed light beam is emitted from the light emitting element 12 in the period in which the orientation of the MEMS mirror 15 changes in the horizonal direction. In addition, even if pulsed light beam is not emitted from the light emitting element 12 during this period, light beam is emitted by an intensity weaker than the emission intensity of the pulsed light beam.

If in this way superposed light beam of continuous light beam and pulsed light beam is emitted, the result is that continuous light beam is emitted, therefore when the mobile body 30 is scanned by such light beam, the position measurement photo sensor 31 can detect light beam emitted from the station 10. As a result, it is possible to identify the direction of the mobile body 30 with respect to the station 10.

Further, the intensity of the light beam between pulses is weak, therefore even if light beam is reflected at an object around the station 10, the intensity of the reflected light beam will be small. For this reason, light beam of a high intensity of greater than or equal to the predetermined intensity detected at the distance measurement photo sensor 19 may be reflected light beam of the pulsed light beam. Therefore, it is possible to identify the distance between the station 10 and the mobile body 30 based on light beam of a high intensity of greater than or equal to the predetermined intensity detected at the distance measurement photo sensor 19.

Note that, as explained above, the light beam for position measurement need not be continuous light beam and may be pulsed light beam. In this case, the continuous light beam and the pulsed light beam may or may not be superposed. In any case, the intensity of the position measurement pulsed light beam is weaker than the intensity of the distance measurement pulsed light beam. Further, the frequency of emission of position measurement pulsed light beam may be higher than the frequency of emission of distance measurement pulsed light beam. Further, the emission time per position measurement pulsed light beam may be longer than an emission time per distance measurement pulsed light beam. Alternatively, the same pulsed light beam used for both position measurement and distance measurement may be emitted. In these cases, only pulsed light beam is emitted from the station 10 and the direction parameter is identified and the distance parameter is identified based on the pulsed light beam.

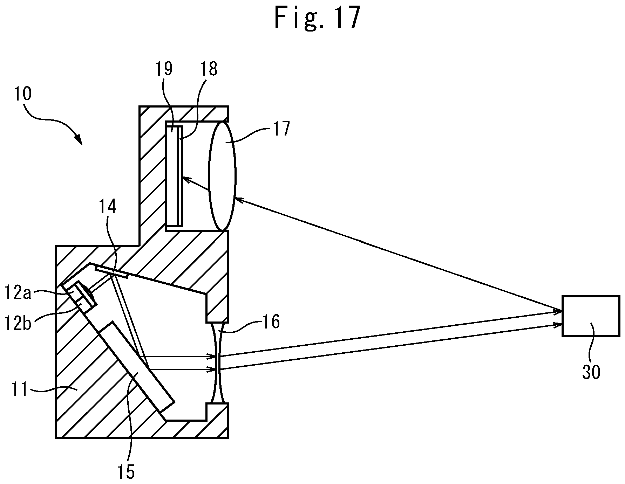

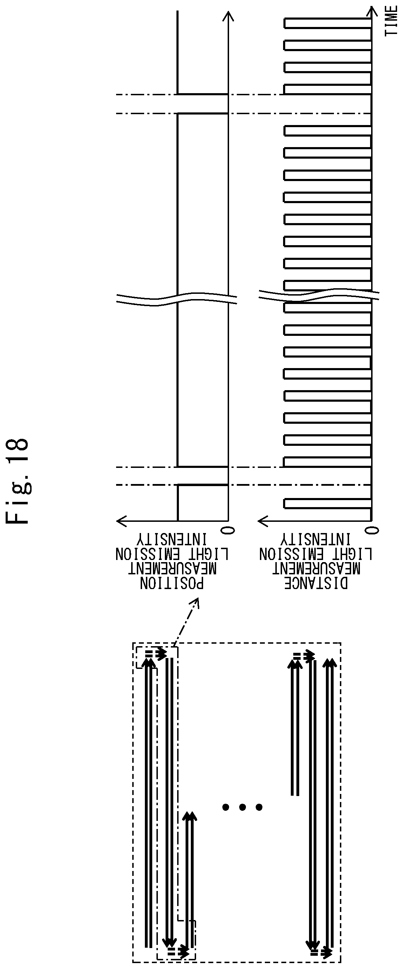

Next, referring to FIGS. 17 and 18, a second modification of the information processing system 1 according to the second embodiment will be explained. In the above second embodiment and its first modification, a single light emitting element 12 functioning as the first light source and the second light source was used. As opposed to this, in the second modification, continuous light beam used for identification of the value of the direction parameter and pulsed light beam used for identification of the value of the distance parameter are emitted from separate light emitting elements 12a, 12b.

FIG. 17 is a cross-sectional side view, similar to FIG. 10, schematically showing the configuration of part of the station 10 according to a second modification of the second embodiment. As shown in FIG. 17, the station 10 according to the second modification has component elements similar to the component elements of the station 10 shown in FIG. 10. However, the station 10 of the present embodiment has, as light emitting elements, the two light emitting elements of a first light emitting element 12a (first light source) and a second light emitting element 12b (second light source). The first light emitting element 12a and the second light emitting element 12b emit light beam different from each other, in particular light beam different in wavelength from each other, in substantially the same direction.

FIG. 18 is a view, similar to FIG. 14, schematically showing a state where a predetermined space around the station 10 is scanned by light beam emitted from the station 10. As shown in FIG. 18, the first light emitting element 12a emits continuous light beam while the second light emitting element 12b emits pulsed light beam.

Further, the position measurement photo sensor 31 is configured to detect reception of a light of a specific wavelength. Specifically, it is configured to be able to detect the reception of light emitted from the first light emitting element 12a and not to be able to detect the reception of light from the second light emitting element 12b. On the other hand, the distance measurement photo sensor 19 is configured to detect reception of light of a specific wavelength different from the wavelength detected by the position measurement photo sensor 31. Specifically, the distance measurement photo sensor 19 is configured to not be able to detect the reception of light emitted from the first light emitting element 12a and to be able to detect the reception of light from the second light emitting element 12b.

In the information processing system 1 according to the second modification configured in this way, only continuous light beam emitted from the first light emitting element 12a is detected by the position measurement photo sensor 31. Therefore, it is possible to identify the direction of the mobile body 30 with respect to the station 10 based on the results of detection by the position measurement photo sensor 31. Further, only the pulsed light beam emitted from the second light emitting element 12b is detected by the distance measurement photo sensor 19. Therefore, it is possible to identify the distance between the station 10 and mobile body 30 based on the results of detection by the distance measurement photo sensor 19.

Above, preferred embodiments relating to the present disclosure were explained, but the present disclosure is not limited to these embodiments and can be corrected and changed in various ways within the language of the claims.

For example, in the above embodiments, the processor 34 of the mobile body 30 has the direction identifying part 341, the processor 23 of the station 10 has the distance identifying part 232, and the processor 43 of the main unit 40 has the position identifying part 435. However, the processors 23, 43 of the station 10 or the main unit 40 may have the direction identifying part 341, the processors 34, 43 of the mobile body 30 or the main unit 40 may have the distance identifying part 232, and the processors 23, 34 of the station 10 or the mobile body 30 may have the position identifying part 435.

In the above embodiments, the image data generated by the main unit 40 is output to the monitor 5 set inside real space. From another viewpoint, the monitor 5 does not move even if the mobile body 30 or user moves. However, such image data may for example also be output to a monitor which moves together with the user such as with a head mounted display.

Further, in the second embodiment, in the scan processing for measuring distance, an MEMS mirror 15 is used. However, the scan processing for measuring distance may be performed by a mechanical turn type lidar etc. without using an MEMS mirror 15.

Further, in the above embodiments, the position of a virtual object is determined based on the value of the direction parameter or value of the position parameter of the mobile body 30 and an image is output based on the position of the virtual object. However, control, measurement, etc. different from output of an image may be performed based on the value of the direction parameter or value of the position parameter of the mobile body 30.

Further, in the above embodiments, the space in front of the monitor 5 is scanned by the station 10. However, the station 10 need not be placed so as to scan the space in front of the monitor 5. Real space may be scanned without regard as to the monitor 5.

In addition, in the above embodiments, the vertical direction orientation of the mobile body 30 with respect to the station 10 is identified in accordance with the vertical direction angle of the MEMS mirror 15 when the light reception time is the longest. However, the vertical direction orientation of the mobile body 30 with respect to the station 10 may be identified based on the vertical direction angle of the MEMS mirror 15 other than when the light reception time is the longest. Specifically, for example, an intermediate angle of these may be identified as the vertical direction orientation of the mobile body 30 with respect to the station 10 based on the vertical direction angle of the MEMS mirror 15 when first detecting light reception and when last detecting light reception.

Further, in the above embodiments, the horizontal direction orientation of the mobile body 30 with respect to the station 10 is identified based on the timing when reception of light started to be detected. However, the horizontal direction orientation of the mobile body 30 with respect to the station 10 may be identified based on the timing of the center of the reception period, the timing when the reception intensity is greatest, or other timing.

Furthermore, the mobile body 30 may be provided with a plurality of position measurement photo sensors 31 detecting light beam from different directions with respect to the mobile body 30. In this case, the posture of the mobile body 30 may be detected based on the orientation of the position measurement photo sensor 31 detecting the light beam.

In addition, two or more stations 10 may be connected to one main unit 40. In this case, each station 10 is configured to not detect a distance parameter and detect only a direction parameter. The three-dimensional position of the mobile body 30 may be identified by triangulation based on the values of the direction parameters detected by the two stations 10.

### REFERENCE SINGS LIST

- 1: Information processing system
- 5: Monitor
- 6: Display screen
- 10: Station
- 11: Housing
- 12: Light emitting element
- 15: MEMS mirror
- 30: Mobile body
- 40: Main unit

## Claims

1. An information processing system having: a station; a mobile body able to move with respect to the station; and at least one processor, wherein
the station has a first light source and a MEMS mirror driven two-dimensionally, and makes light beam from the first light source be reflected by the MEMS mirror while driving the MEMS mirror to be emitted to a predetermined space around the station so as to scan the space two-dimensionally by the light beam,
the mobile body has a first photo sensor for detecting reception of the light beam, and
the processor has a direction identifying part for identifying a value of a direction parameter indicating a relative direction of the mobile body with respect to the station, based on a timing at which the first photo sensor detected reception of the light beam during the scan of the space by the station.

2. The information processing system according to claim 1, wherein the processor further has:
a position determining part for determining a position of a virtual object in a virtual space based on the value of the direction parameter;
an image generating part for generating image data based on the position of the virtual object; and
an image outputting part for outputting the generated image data.

3. The information processing system according to claim 2, wherein the image outputting part outputs the image data to a monitor placed in real space.

4. The information processing system according to claim 3, wherein the station is placed near the monitor so that the light beam is emitted toward the space in front of a display screen of the monitor.

5. The information processing system according to claim 3, wherein the processor further has a guiding part for guiding a user to place the station near the monitor so that the light beam is emitted toward the space in front of a display screen of the monitor.

6. The information processing system according to any one of claims 1-5, wherein
the station further has a second light source and a second photo sensor for detecting reception of reflected light beam of the light beam emitted from the second light source, and
the processor further has a distance identifying part for identifying a value of a distance parameter indicating a distance between the station and an object around the station, based on reflected light beam detected by the second photo sensor.

7. The information processing system according to claim 6, wherein the second light source emits light beam so as to enter the MEMS mirror and be reflected by the MEMS mirror.

8. The information processing system according to claim 7, wherein the second light source and the first light source are the same shared light source.

9. The information processing system according to claim 8, wherein
the station alternately performs scan processing for position measurement making the light beam from the shared light source perform a scan two-dimensionally so as to identify the value of the direction parameter and scan processing for distance measurement making the light beam from the shared light source perform a scan two-dimensionally so as to identify the value of the distance parameter, and
the shared light source emits light beam by different modes between the scan processing for position measurement and the scan processing for distance measurement.

10. The information processing system according to claim 8, wherein the shared light source emits light beam comprised of continuous light beam and pulsed light beam superposed, while making the light beam from the shared light source perform a scan two-dimensionally.

11. The information processing system according to claim 7, wherein the first light source and the second light source are separate light sources emitting different light beam.

12. The information processing system according to claim 11, wherein the first light source and the second light source emit light beam of different wavelengths.

13. The information processing system according to any one of claims 6-12, wherein the processor further has a position identifying part for identifying a value of a position parameter indicating a three-dimensional position of the mobile body with respect to the station, based on the value of the direction parameter and the value of the distance parameter.

14. The information processing system according to any one of claims 1-13, wherein
the station performs a raster scan in which a linear scan in a first direction by light beam from the first light source is performed multiple times in parallel while shifting in a second direction perpendicular to the first direction, and
the direction identifying part identifies a value of a direction parameter relating to the second direction of the mobile body corresponding to the orientation of the second direction of the light beam from the first light source when a reception time by the first photo sensor is the longest in one scan in the first direction.

15. The information processing system according to any one of claims 1-14, wherein
the station performs a raster scan in which a linear scan in a first direction by light beam from the first light source is performed multiple times in parallel while shifting in a second direction perpendicular to the first direction, and
at least one of the at least one processor is configured to identify a value of a direction parameter relating to the first direction of the mobile body based on a timing of change so that a reception intensity by the first photo sensor becomes higher.

16. The information processing system according to any one of claims 1-15, wherein the processor having the direction identifying parts is provided at the mobile body.

17. An information processing method comprising:
making light beam from a first light source of a station be reflected by a MEMS mirror while driving the MEMS mirror of the station to be emitted to a predetermined space around the station so as to scan that space two-dimensionally by that light beam;
detecting reception of that light beam by a first photo sensor of a mobile body able to move relative to the station; and
identifying a value of a direction parameter indicating a relative direction of the mobile body with respect to the station based on a timing at which the first photo sensor detected reception of the light beam during the scan of the space at the station.
